(19) Europäisches Patentamt
European Patent Office
Office européen des brevets

(11) **EP 2 790 115 A1**

(12) **DEMANDE DE BREVET EUROPEEN**

(43) Date de publication:
**15.10.2014 Bulletin 2014/42**

(51) Int Cl.:
***G06F 17/30*** *(2006.01)*

(21) Numéro de dépôt: **14163331.3**

(22) Date de dépôt: **03.04.2014**

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**
Etats d'extension désignés:
**BA ME**

(30) Priorité: **12.04.2013 FR 1353325**

(71) Demandeur: **BULL SAS
78340 Les Clayes sous Bois (FR)**

(72) Inventeurs:
• **Ficet, Aline
91350 Grigny (FR)**
• **Doucerain, Cyril
92260 Fontenay-aux-Roses (FR)**

(74) Mandataire: **Hirsch & Associés
58, avenue Marceau
75008 Paris (FR)**

(54) **Accès à une base de données relationnelle par détermination automatique de jointures optimales**

(57) L'invention concerne un procédé pour permettre un accès par un utilisateur à une base de données relationnelle consistant à effectuer des jointures entre tables et comportant :

Une première étape (E1) de détermination d'un sous-ensemble de tables;

Une deuxième étape (E2) de détermination des combinaisons ordonnées possibles parmi ce sous-ensemble ; et

Pour chaque chacune desdites combinaisons, une troisième étape constituée de

une première sous-étape (E3a) de détermination d'une première jointure entre la première table et une quelconque des autres tables;

une seconde sous-étape (E3b) itérative de détermination d'une jointure entre une table non encore jointe et une quelconque des tables déjà jointes de la combinaison

Une quatrième étape (E4) consistant à sélectionner une combinaison parmi les combinaisons en fonction d'un critère à minimiser, et à réaliser effectivement les jointures déterminées pour cette combinaison.

**Fig. 1**

**Description**

DOMAINE DE L'INVENTION

L'invention concerne les systèmes de gestion de base de données relationnelles et notamment l'interrogation de tels systèmes au moyen de requêtes afin d'afficher, filtrer, ajouter, mettre à jour ou supprimer des données de la base de données.

CONTEXTE DE L'INVENTION

Les bases de données relationnelles sont des structures de données organisées sous la forme de tables au sein desquelles les données sont indexées au moyen de clés.
Typiquement, une table comporte un ensemble d'enregistrement (ou lignes) indexées par une clé primaire. Les colonnes de la table représentent les champs. Un enregistrement comporte une valeur pour chacun des champs de la table. Les tables peuvent se référencer entre elles afin de structurer l'information, en comportant un champ ayant pour valeur une clé d'une autre table.
Il est bien connu d'associer une base de données à un système de gestion afin d'assurer une interface destinée aux utilisateurs de la base de données qui soit indépendante de la structure physique de la base de données. Cette interface peut permettre notamment une interrogation via un langage d'interrogation structuré tel que le langage SQL (pour « Structured Query Language » en anglais) qui est normalisé à la fois par l'ISO (International Standards Organization) et par l'ANSI (American National Standards Institute).
Ce langage permet au moyen d'un ensemble de commandes ou types de requêtes de manipuler les données au sein de la base de données DB. Ces commandes permettent d'effectuer notamment des recherches, d'ajouter des données, de mettre à jour (ou modifier) des données présentes, d'effacer des données, de créer ou de supprimer des tables, etc.
Certaines requêtes permettent donc de modifier le contenu de la base de données DB. C'est le cas, par exemples, des commandes d'insertion d'un enregistrement (commande « Insert »), de mise à jour d'un enregistrement (commande « Update ») et des commandes de suppression (commande « Delete »).
Toutefois malgré cette interface normalisée, l'interrogation d'une base de données demeure une tâche complexe pour l'utilisateur et susceptible d'erreurs.
Tout d'abord, l'utilisateur doit connaître la structure topologique de la base de données afin de construire une bonne requête.
Certaines requêtes peuvent impliquer de nombreuses tables et peuvent donc être compliqués à construire correctement, sans commettre d'erreurs sur le nom des tables, des champs ou les liens qui existent entre les tables.

RESUME DE L'INVENTION

Le but de la présente invention est de fournir un procédé, un dispositif et un programme d'ordinateur palliant au moins partiellement les inconvénients précités.
À cette fin, la présente invention propose comme premier objet un procédé pour permettre un accès par un utilisateur à une base de données relationnelle comportant un ensemble de tables consistant à effectuer des jointures entre tables et comportant :

- Une première étape de détermination d'un sous-ensemble de tables parmi l'ensemble de tables ;
- Une deuxième étape de détermination des combinaisons ordonnées possibles parmi ce sous-ensemble ; et
- Pour chaque chacune des combinaisons, une troisième étape constituée de :

  une première sous-étape de détermination d'une première jointure entre la première table de la combinaison et une quelconque des autres tables de la combinaison ;
  une seconde sous-étape de détermination d'une jointure entre une table non encore jointe et une quelconque des tables déjà jointes de la combinaison ; la seconde sous-étape étant itérée pour chaque table non encore jointe dans l'ordre de la combinaison jusqu'à la dernière table de celle-ci ;

- Une quatrième étape consistant à sélectionner une combinaison parmi les combinaisons, en fonction d'un critère à minimiser, et à réaliser effectivement les jointures déterminées pour la combinaison sélectionnée.

Suivant des modes de réalisation préférés, l'invention comprend une ou plusieurs des caractéristiques suivantes qui peuvent être utilisées séparément ou en combinaison partielle entre elles ou en combinaison totale entre elles :

La première étape consiste à déterminer le sous-ensemble à partir d'une requête transmise par l'utilisateur.
La seconde étape consiste à déterminer l'ensemble des combinaisons ordonnées possibles à partir d'une première table fixe.
La première table fixe est déterminée par une requête transmise par l'utilisateur.
Le procédé comporte en outre une étape préliminaire consistant à déterminer un graphe à partir de la base de données et les jointures sont déterminées à partir du graphe.
La première sous-étape et la seconde sous-étape comportent, pour une combinaison courante, l'établissement d'un chemin entre deux tables pouvant passer par une ou plusieurs tables intermédiaires, ladite une ou plusieurs tables intermédiaires étant incorporée dans la combinaison courante et considérée comme jointe.

Chaque couple de tables est associé à un poids et l'établissement d'un chemin est réalisé en fonction de ces poids.

Cet établissement est réalisé conformément à un algorithme de Dijkstra.

Le procédé comporte en outre une étape de tri consistant à réordonner les tables dans un ordonnancement correspondant à l'ordonnancement du sous-ensemble et en y incorporant les tables intermédiaire de sorte que chaque table de l'ordonnancement puisse être jointe à une table précédente dans l'ordonnancement

La quatrième étape consiste à sélectionner la combinaison en fonction du nombre de tables dans chacune des combinaisons.

Un autre aspect de l'invention concerne un procédé d'interrogation d'une base de données relationnelle comportant les étapes du procédé précédemment décrit, et une étape de transmission d'une requête destinée à ladite base de données et de traitement de ladite requête sur le base desdites jointures.

Un autre aspect de l'invention concerne un programme d'ordinateur comprenant des instructions qui, une fois chargées sur un système de traitement de l'information, sont aptes à mettre en oeuvre le procédé précédemment décrit.

Un autre aspect de l'invention concerne un dispositif pour permettre un accès par un utilisateur à une base de données relationnelle comportant un ensemble de tables consistant à effectuer des jointures entre tables et comportant :

Des premiers moyens pour déterminer un sous-ensemble de tables parmi ledit ensemble de tables ;
Des seconds moyens pour déterminer des combinaisons ordonnées possibles parmi ledit sous-ensemble ; et
Des troisième moyen pour, pour chaque chacune desdites combinaisons,

déterminer une première jointure entre la première table de ladite combinaison et une quelconque des autres tables de ladite combinaison ;
déterminer une jointure entre une table non encore jointe et une quelconque des tables déjà jointes de ladite combinaison ; de façon itérative pour chaque table non encore jointe dans l'ordre de ladite combinaison jusqu'à la dernière table de ladite combinaison ;

Des quatrièmes moyens pour sélectionner une combinaison parmi lesdites combinaisons, en fonction d'un critère à minimiser, et pour réaliser effectivement les jointures déterminées pour la combinaison sélectionnée.

Suivant des modes de réalisation préférés, l'invention comprend une ou plusieurs des caractéristiques suivantes qui peuvent être utilisées séparément ou en combinaison partielle entre elles ou en combinaison totale entre elles :

Lesdits troisièmes moyens sont prévus pour, pour une combinaison courante, établir un chemin entre deux tables pouvant passer par une ou plusieurs tables intermédiaires, ladite une ou plusieurs tables intermédiaires étant incorporée dans ladite combinaison courante et considérée comme jointe.

Le dispositif comporte en outre des moyens de tri (ET) prévus pour réordonner lesdites tables dans un ordonnancement correspondant à l'ordonnancement dudit sous-ensemble et en y incorporant lesdites tables intermédiaire de sorte que chaque table dudit ordonnancement puisse être jointe à une table précédente dans ledit ordonnancement

D'autres caractéristiques et avantages de l'invention apparaîtront à la lecture de la description qui suit d'un mode de réalisation préféré de l'invention, donnée à titre d'exemple et en référence aux dessins annexés.

BREVE DESCRIPTION DES DESSINS

La figure 1 représente un organigramme illustrant l'enchaînement des étapes d'un procédé selon un mode de réalisation de l'invention.
La figure 2 représente schématiquement un exemple d'architecture topologique d'une base de données relationnelle pour illustrer certaines des étapes du procédé selon l'invention.

DESCRIPTION DETAILLEE DE L'INVENTION

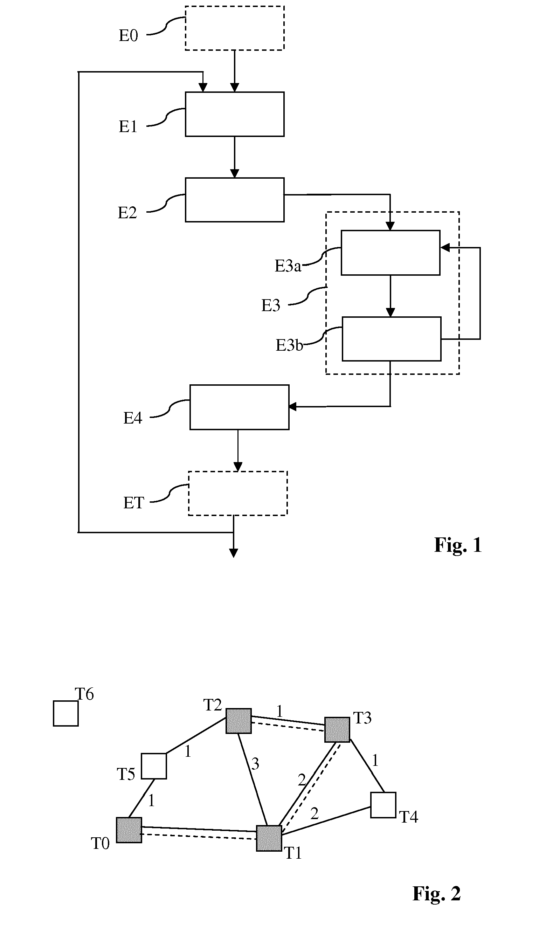

Un aspect de l'invention concerne un procédé qui peut être représenté de façon schématique sous la forme d'un organigramme comme par exemple sur la figure 1. Bien évidemment, l'invention ne saurait être réduite à la mise en oeuvre illustrée par cette figure et notamment d'autres enchaînements sont possibles tout en restant dans le cadre de l'invention.

L'invention sera expliquée également en se basant sur la figure 2 à titre d'exemple illustratif de déroulement du procédé de l'invention. Cette figure 2 illustre un exemple d'architecture topologique d'une base de données relationnelle constituée de 6 tables, T1, T2, T3, T4, T5, T6.

Les lignes joignant les tables représentent les liens entre tables (c'est-à-dire qu'au moins une des tables a un champ contenant une clé de l'autre table). Ces liens, classiquement, peuvent être de type 1-1, 1-N ou N-N.

Il peut être prévu d'affecter des poids aux liens entre les tables. Ces poids peuvent permettre privilégier certains liens par rapport à d'autres. Ainsi, typiquement, un poids de 0 ou 1 donne au lien une priorité plus importante qu'un poids plus élevé.

Lorsque deux tables ne sont pas liés (comme les tables T0 et T6), il peut être prévu d'affecter un poids égal à -1 au « lien » entre elles.

Plus clairement, il est possible, selon un mode de réalisation de l'invention, d'associer un poids à chaque couple de tables.

Le procédé de l'invention peut alors consister à rechercher une solution minimisant le poids total, ainsi qu'il sera expliqué ultérieurement.

Afin notamment de gérer plus facilement ces poids, il peut être prévu une étape préliminaire E0 consistant à générer un graphe à partir des tables de la base de données.

Le graphe permet de représenter d'une façon aisée et facile à exploiter les poids affectés aux liens entre tables.

Il peut être possible de transformer le graphe généré en matrice d'adjacence. Celle-ci est équivalent au graphe, puisque issue d'une transformée mathématique bijective mais facilite l'encodage informatique et les traitements ultérieurs.

Une matrice d'adjacence est une matrice dont chaque élément $a_{ij}$ a pour valeur le poids associé au couple formé par la table $T_i$ et la table $T_j$, c'est-à-dire au lien entre ces deux tables $T_i$, $T_j$ dans le graphe généré. Cette matrice est symétrique, c'est-à-dire telle que $a_{ij}=a_{ji}$, pour tout couple i, j.

Une telle matrice peut donc être :

$$\begin{pmatrix} -1 & 1 & -1 & -1 & -1 & 1 & -1 \\ 1 & -1 & 3 & 2 & 2 & -1 & -1 \\ -1 & 3 & -1 & 1 & -1 & 1 & -1 \\ -1 & 2 & 1 & -1 & 1 & -1 & -1 \\ -1 & 2 & -1 & 1 & -1 & -1 & -1 \\ 1 & -1 & 1 & -1 & -1 & -1 & -1 \\ -1 & -1 & -1 & -1 & -1 & -1 & -1 \end{pmatrix}$$

Dans cet exemple de mise en oeuvre, la valeur « -1 » indique les tables correspondantes ne sont pas liées. La valeur « 0 » peut ainsi être utilisée pour indiquer qu'une table est reliée à elle-même (le coût d'une telle liaison est alors considérée nul), ce qui est possible dans certains schémas de bases de données relationnelles.

D'autres mises sont possibles.

Cette étape de génération d'un graphe à partir de la base de données et d'éventuellement une matrice d'adjacence peut n'être effectuée qu'au début de l'exploitation de la base de données. Tout nouvel accès à la base de données (requêtes SQL etc.) peut se baser le résultat de cette étape préalable. Pour cette raison, une boucle est représentée sur la figure 1 entre les étapes E1, E2, E3, E4 et ET représentant les accès successifs à la base de données, et en dehors de laquelle est laissée l'étape préliminaire E0.

Il est toutefois possible d'effectuer à nouveau cette étape préliminaire E0, par exemple si un utilisateur modifie un ou plusieurs poids par exemple.

Le procédé selon l'invention concerne plus particulièrement l'accès à la base de données par un utilisateur et comporte des étapes E1, E2, E3 et E4.

Une première étape, E1, peut consister à déterminer un sous-ensemble de tables parmi l'ensemble des tables contenues dans la base de données. Ce sous-ensemble peut être déterminé par la requête que l'utilisateur de la base de données a ou souhaite effectuer, que cet utilisateur soit un utilisateur humain ou un programme d'ordinateur.

Ainsi, le contenu d'une requête peut indiquer des tables qui peuvent ainsi constituer le sous-ensemble en question à la volée. Le sous-ensemble est alors déterminé à partir d'une requête (qui peut être en langage SQL) transmise par l'utilisateur.

Également, le sous-ensemble peut être déterminé, totalement ou partiellement, préalablement à une requête en anticipant les requêtes possibles ou prévisibles. C'est par exemple possible lorsque l'utilisateur n'est susceptible de ne s'intéresser qu'à un aspect d'une base de données, ou bien de ne s'intéresser à cet aspect que dans une majorité des situations (dans les autres cas, une interrogation classique de la base de données est possible, en utilisant son architecture topologique).

Par exemple, certaines tables peuvent n'avoir qu'un usage interne à la base de données elles-mêmes (pour des raisons d'architecture topologique, il peut être utile ou nécessaire de créer des tables qui n'ont aucune signification pour les utilisateurs). Ces tables peuvent ne pas faire partie des sous-ensembles déterminés à l'étape E1.

Un autre exemple peut consister à avoir plusieurs vues disponibles pour une même base de données, par exemple un utilisateur peut avoir une vue correspondant à des droits d'accès normaux, tandis qu'un autre utilisateur peut avoir une vue correspondant à des droits d'accès d'administrateur. Dans les deux cas, les sous-ensembles de tables peuvent être très différents.

Dans l'exemple de la figure 2, on suppose que le sous-ensemble de tables est constitué des tables T0, T1, T2 et T3. Ces 4 tables sont représentées en grisé sur la figure pour davantage de clarté.

Une deuxième étape E2 du procédé selon l'invention consiste à déterminer les combinaisons ordonnées possibles parmi ce sous-ensemble. Cette étape permet de s'affranchir de l'ordre dans lequel sont fournies les tables lors de l'étape E1 précédente. On verra en effet ultérieurement que l'ordre influe sur le résultat final.

Selon un mode de réalisation de l'invention, le premier élément du sous-ensemble est fixe. Ce premier élément est la table de référence, T0 dans cet exemple, qui peut être déterminé à partir du type d'accès à la base de données et notamment de la requête. Cette requête, qui peut être faite en langage SQL, fait en effet explicitement référence à une table particulière et cette référence explicite peut servir de base pour déterminer la table de référence T0.

À partir de cette première table fixe T0, l'étape E2 peut déterminer 6 combinaisons ordonnées :

T0, T1, T2, T3
T0, T1, T3, T2
T0, T2, T1, T3
T0, T2, T3, T1
T0, T3, T1, T2
T0, T3, T2, T1

L'étape suivante E3 est réalisée pour chacune des combinaisons déterminées à l'étape E2. Elle peut être considérée comme constituée de deux sous-étapes, E3a, E3b. Sur la figure 1, une boucle lie les sous-étapes E3a et E3b pour signifier que ces deux sous-étapes sont itérées pour chaque combinaison.

Cette étape E3 vise à déterminer des jointures entre les tables selon l'ordre de la combinaison. Cette détermination n'implique pas la réalisation effective des jointures dans la base de données. En effet, cette étape consister à effectuer des calculs pour chaque combinaison et une fois ces calculs effectués, une quatrième étape E4 consistera à sélectionner une « meilleure » combinaison et à effectivement réaliser les jointures correspondant à cette combinaison sélectionnée.

Dans le domaine des bases de données relationnelles, une jointure correspond au produit cartésien de deux tables, réalisé en établissant un lien ou égalité entre deux colonnes (ou champs), une de chaque table. Déterminer une jointure entre deux tables comprend donc la recherche des colonnes qui sont de même nature et peuvent donc être mises en correspondance.

La première sous-étape E3a consiste à traiter la première table de la combinaison courante, tandis que la seconde sous-étape E3b consiste à traiter les autres tables de cette combinaison.

La première sous-étape E3a cherche à créer une jointure « d'amorçage » entre cette première table T0 et une table quelconque des autres tables de ladite combinaison. Il est sous-entendu ici que les autres tables sont considérées selon l'ordre de la combinaison ordonnée.

Ainsi, dans l'exemple de la figure 2 :

Pour la combinaison T0, T1, T2, T3, on cherche à déterminer une jonction entre la table T0 et, dans l'ordre, la table T1 puis, si ce n'est pas possible avec la table T1, avec la table T2, puis si ce n'est pas possible avec la table T1 ou la table T2, avec la table T3.

Pour la combinaison T0, T1, T3, T2, on cherche à déterminer une jonction entre la table T0 et, dans l'ordre, la table T1 puis, si ce n'est pas possible avec la table T1, avec la table T3, puis si ce n'est pas possible avec la table T1 ou la table T3, avec la table T2.

Pour la combinaison T0, T2, T1, T3, on cherche à déterminer une jonction entre la table T0 et, dans l'ordre, la table T2 puis, si ce n'est pas possible avec la table T2, avec la table T1, puis si ce n'est pas possible avec la table T2 ou la table T1, avec la table T3.

Pour la combinaison T0, T2, T3, T1, on cherche à déterminer une jonction entre la table T0 et, dans l'ordre, la table T2 puis, si ce n'est pas possible avec la table T2, avec la table T3, puis si ce n'est pas possible avec la table T2 ou la table T3, avec la table T1.

Pour la combinaison T0, T3, T1, T2, on cherche à déterminer une jonction entre la table T0 et, dans l'ordre, la table T3 puis, si ce n'est pas possible avec la table T3, avec la table T1, puis si ce n'est pas possible avec la table T3 ou la table T1, avec la table T2.

Pour la combinaison T0, T3, T2, T1, on cherche à déterminer une jonction entre la table T0 et, dans l'ordre, la table T3 puis, si ce n'est pas possible avec la table T3, avec la table T2, puis si ce n'est pas possible avec la table T3 ou la table T2, avec la table T1.

La seconde sous-étape E3b consiste à déterminer une jonction entre une table non encore liée et une quelconque des tables déjà jointes de la combinaison. La table non encore jointe considérée est la prochaine dans l'ordre de la combinaison ordonnée. Cette seconde sous-étape est itérée pour chaque table non encore jointe dans l'ordre de la combinaison jusqu'à la dernière table de la combinaison.

Il est possible qu'il ne soit pas possible de joindre directement une table à une table déjà jointe. En ce cas, il peut être nécessaire d'effectuer une jointure multiple en utilisant une ou plusieurs tables intermédiaires. Cette ou ces tables intermédiaires sont alors considérées comme jointes également. Ainsi, une combinaison peut contenir, à la fin des itérations de l'étape E3 un plus grand nombre de tables qu'initialement.

La détermination d'une jointure peut se faire sur la base des liens existants entre les tables. Dans la mesure où un graphe a été établi lors d'une étape préliminaire E0, la détermination des jointures peut être à partir de ce graphe.

Ces deux sous-étapes peuvent comprendre l'établissement d'un chemin entre deux tables, soit,

- Dans la première sous-étape E3a, entre la première table de la combinaison courante et une quelconque des autres tables de cette combinaison ; et

- Dans la seconde sous-étape E3b, entre une table non encore jointe et une quelconque des tables déjà jointes de la combinaison.

Ce chemin peut passer par une ou plusieurs tables intermédiaires. Dans ce cas, la ou les tables intermédiaires sont incorporées dans la combinaison courante et considérées comme jointes (pour les itérations suivantes de la sous-étape E3b).

Si des poids ont été affectés ainsi que précédemment décrit, l'établissement d'un chemin est réalisé en fonction de ces poids.

L'établissement d'un chemin peut se faire sur la base d'un graphe précédemment généré par une étape préalable E0. Il peut en outre être réalisé conformément à un algorithme de Dijkstra.

L'algorithme de Dijkstra permet de prendre en compte les poids et vise à déterminer un plus court chemin dans un graphe. Il a été décrit pour la première fois en 1971 dans l'article *« A short Introduction to the Art of Programming »* de Edsger W. Dijsktra. Cet algorithme est abondamment décrit dans la littérature : wikipedia, mais aussi manuels d'algorithmique ou ouvrages sur la théorie des graphes.

Grâce à cette étape E3, le procédé selon l'invention évite d'effectuer des jointures en double car la sous-étape E3b vise à ne déterminer des nouvelles jointures qu'avec des tables qui n'ont pas encore été jointes. Cela apparaitra de façon plus claire dans l'exemple de déroulement de cette étape ci-dessous.

Une fois les jointures déterminées pour l'ensemble des combinaisons, une étape E4 consiste à sélectionner une combinaison parmi cet ensemble de combinaisons, en fonction d'un critère à minimiser, puis à réaliser effectivement les jointures déterminées pour la combinaison sélectionnée.

Le critère peut être simple le plus court chemin, c'est-à-dire le plus petit nombre de tables dans la combinaison (puisque, comme nous l'avons vue, l'étape E3 peut impliquer d'incorporer des tables intermédiaires dans la combinaison).

Dans le cas où des poids ont été affectés, le critère peut consister à minimiser le poids total de la combinaison.

Dans l'exemple de la figure 2, nous avons précédemment vu que 6 combinaisons ordonnées avaient été déterminées à l'étape E2. Nous n'allons dérouler l'algorithme de l'étape E3 que sur les deux premières combinaisons, T0, T1, T2, T3 et T0, T1, T3, T2.

Pour la première combinaison la première sous-étape E3a consiste à déterminer une première jointure entre la première table T0 et une quelconque des tables T1, T2, T3 dans cet ordre. On considère donc d'abord la table T1 et on remarque sur la figure 2 que les tables T0 et T1 sont directement liés et que le poids associé est de 1. L'algorithme de Dijkstra détermine que la première jointure est effectivement celle entre les tables T0 et T1. La table T1 est alors considérée comme jointe.

La seconde sous-étape E3b consiste pour la première itération à déterminer une jointure entre une table non encore jointe, T2 et une quelconque des tables déjà jointes T0, T1. La table non encore jointe considérée est la prochaine dans l'ordre de la combinaison ordonnée : T0 et T1 étant déjà jointe, il s'agit donc de la table T2.

Plusieurs chemins existent entre la table T2 et l'une des tables T0 et T1. Notamment, le chemin T2-T1 a un poids de 3, tandis que le chemin T2-T5-T0 a un poids de 2 (1+1). Ce plus court chemin peut notamment être obtenu par l'algorithme de Dijkstra.

La table intermédiaire T5 est donc incorporée dans la combinaison courante et considérée comme jointe.

L'itération suivante consiste à déterminer une nouvelle jointure entre la table non encore jointe suivante, c'est-à-dire la table T3 et l'une des tables déjà jointe, c'est-à-dire T0, T1, T5, T2. Le chemin le plus court, qui peut être fourni par l'algorithme de Dijkstra permet de relier la table T3 à la table T2.

Plus d'autres tables étant non encore jointe à ce stade, une nouvelle itération n'est pas effectuée. La combinaison finale obtenue est T0, T1, T5, T2, T3

Pour la seconde combinaison T0, T1, T3, T2, la première sous-étape E3a consiste à déterminer une première jointure entre la première table T0 et une quelconque des tables T1, T3, T2 dans cet ordre. On considère donc d'abord la table T1 et on remarque sur la figure 2 que les tables T0 et T1 sont directement liés et que le poids associé est de 1. L'algorithme de Dijkstra détermine que la première jointure est effectivement celle entre les tables T0 et T1. La table T1 est alors considérée comme jointe.

La seconde sous-étape E3b consiste pour la première itération à déterminer une jointure entre une table non encore jointe, T3 et une quelconque des tables déjà jointes T0, T1. La table non encore jointe considérée est la prochaine dans l'ordre de la combinaison ordonnée : T0 et T1 étant déjà jointe, il s'agit donc de la table T3.

Le chemin le plus court, qui peut être fourni par l'algorithme de Dijkstra permet de relier la table T3 à la table T1 directement. La table T3 est donc simplement marquée comme jointe dans la combinaison courante.

L'itération suivante consiste à déterminer une nouvelle jointure entre la table non encore jointe suivante, c'est-à-dire la table T2 et l'une des tables déjà jointe, c'est-à-dire T0, T1, T3. Le chemin le plus court, qui peut être fourni par l'algorithme de Dijkstra permet de relier la table T2 à la table T3, déjà jointe. La table T2 est alors marquée comme jointe.

Plus d'autres tables étant non encore jointe à ce stade, une nouvelle itération n'est pas effectuée. La combinaison finale obtenue est T0, T1, T3, T2.

Au travers de ces deux exemples de combinaisons, on voit bien que l'ordre des tables dans la combinaison considérée est important puisqu'il influe sur les jointures possibles. Il est donc important, pour l'obtention d'un résultat final optimal de considérer l'ensemble des combinaisons possibles.

L'étape E4 consiste à sélectionner une combinaison parmi les combinaisons considérées, en fonction d'un critère à minimiser, et à réaliser effectivement les jointures déterminées pour la combinaison sélectionnée.

Ce critère peut être simplement le nombre de tables contenu dans la combinaison considérée. Dans l'exemple, le nombre de table est de 4 ou de 5 selon les combinaisons.

Il est également possible de prendre en compte les poids qui ont été associés aux liens entre les tables et de sélectionner une combinaison minimisant le poids total du chemin formé par la combinaison. Ces deux critères peuvent bien évidemment se combiner.

Le tableau ci-dessous donne pour chaque combinaison ordonnée (fournie par l'étape E2), les deux valeurs de critères que sont le nombre de tables et le poids total.

| Combinaisons | Nombre de tables | Poids total |
| --- | --- | --- |
| T0, T1, T2, T3 | 5 | 4 |
| T0, T1, T3, T2 | 4 | 4 |
| T0, T2, T1, T3 | 5 | 4 |
| T0, T2, T3, T1 | 5 | 4 |
| T0, T3, T1, T2 | 4 | 4 |
| T0, T3, T2, T1 | 4 | 4 |

Lorsque plusieurs combinaisons ont une même valeur de critère, on peut choisir l'une d'entre elles de façon indifférente, par exemple la première dans l'ordre des combinaisons. Ici, donc, la combinaison numéro 2 (T0, T1, T3, T2) peut être retenue et donc sélectionner puisqu'elle est la première (dans l'ordre fournie par l'étape E2) à minimiser simultanément les deux critères (nombre de tables et poids total).

La combinaison T0, T1, T3, T2 est alors utilisée pour effectivement réaliser les jointures qu'elle détermine. Ces jointures sont indiquées en lignes pointillées sur la figure 2.

Une étape de tri ET peut éventuellement être mise en oeuvre afin de s'assurer que la combinaison sélectionnée à l'issue de l'étape E4 est bien ordonnée.

L'étape de tri ET consiste à réordonner les tables selon l'ordonnancement correspondant à celui du sous-ensemble d'origine (c'est-à-dire T0, T1, T2, T3 dans l'exemple) mais on y incorporant les tables intermédiaires, précédemment incorporées, de sorte que chaque table de l'ordonnancement puisse être jointe à une table précédente dans cet ordonnancement.

Par exemple, si la troisième combinaison ordonnée, T0, T2, T1, T3, avait été la combinaison sélectionnée, elle nécessite (comme la première combinaison étudiée précédemment) l'incorporation de la table intermédiaire T5. À l'issue de l'étape E3, la combinaison est T0, T5, T2, T1, T3.

Le tri consiste à réordonner cette combinaison dans l'ordre T0, T1, T2, T3 mais en incorporant la table intermédiaire T5 à la position appropriée.

La table T1 peut être jointe directement à la table T0 et donc l'ordonnancement T0, T1 est correct. La table T2 ne peut être jointe que par l'intermédiaire de la table T5, dans cette combinaison, et la table T5 doit donc être insérée avant elle.

L'étape de tri ET fournit donc l'ordonnancement T0, T1, T5, T2, T3.

Le tableau ci-dessous donne les combinaisons ordonnées fournies à l'étape E2 et les combinaisons ordonnées après l'étape de tri ET. Ce tableau est donné pour l'ensemble des combinaisons et non pas uniquement pour la combinaison sélectionnée. Il est donc fourni ici à titre documentaire uniquement et correspond donc à une mise en oeuvre possible de l'invention différente de celle illustrée par la figure où l'étape de tri n'est effectuée que pour la combinaison sélectionnée.

| | |
| --- | --- |
| T0, T1, T2, T3 | T0, T1, T5, T2, T3 |
| T0, T1, T3, T2 | T0, T1, T3, T2 |
| T0, T2, T1, T3 | T0, T1, T5, T2, T3 |
| T0, T2, T3, T1 | T0, T1, T5, T2, T3 |
| T0, T3, T1, T2 | T0, T1, T3, T2 |
| T0, T3, T2, T1 | T0, T1, T3, T2 |

Grâce au procédé selon l'invention, on est assuré d'obtenir une combinaison de jointures optimale. Notamment, elle ne comprend pas de jointures en double ou de jointures inutiles. Le procédé permet également d'affecter des poids aux liens entre tables (et donc aux jointures potentielles) et le procédé selon l'invention peut en tenir compte afin de proposer la combinaison qui minimise le poids total.

Ce procédé consistant à effectuer des jointures de façon optimale permet d'apporter une vue abstraite de la base de données à ses utilisateurs.

Selon l'invention, une interrogation de la base de données peut consister à transmettre une requête qui est traité sur la base des jointures déterminées selon le procédé précédemment décrit.

Le terme « interrogation » doit être compris au sens large et comprendre notamment des requêtes en langage SQL comme « SELECT », « ADD », « DELETE », etc.

Autrement dit, en reprenant l'exemple de la figure 2, l'utilisateur peut ne voir qu'une jointure T0-T1-T3-T2, c'est-à-dire une sorte de table globale constituée par le produit cartésien des tables T0, T1, T3, T2 (dans cet ordre). Il aura accès aisément à l'ensemble des champs disponibles sans avoir à rien connaître de la structure topologique de la base de données. Notamment, il peut effectuer des requêtes simplement en ne connaissant que les rudiments du langage SQL et sans avoir à effectuer manuellement des jointures entre tables (cette opération nécessitant à la fois de connaître les tables à joindre et à effectuer la jointure de la bonne façon).

Il devient même possible d'interroger la base de données sans connaître et sans utiliser le langage SQL. En effet, une recherche plein-texte, par exemple, est tout à fait possible afin de retrouver une donnée au sein de la jointure T0-T1-T3-T2.

En outre, en cas de changement de la structure topologique de la base de données (ajout, modification, suppression d'une table ou d'un lien entre tables), le procédé selon l'invention permet de continuer à utiliser la base de données sans impact. Le procédé selon l'invention de sélectionne de la meilleure combinaison pour effectuer les jointures est en effet transparent pour les utilisateurs.

Bien entendu, la présente invention n'est pas limitée aux exemples et au mode de réalisation décrits et représentés, mais elle est susceptible de nombreuses variantes accessibles à l'homme de l'art.

**Revendications**

1. Procédé pour permettre un accès par un utilisateur à une base de données relationnelle comportant un ensemble de tables consistant à effectuer des jointures entre tables et comportant :

Une première étape (E1) de détermination d'un sous-ensemble de tables parmi ledit ensemble de tables ;
Une deuxième étape (E2) de détermination des combinaisons ordonnées possibles parmi ledit sous-ensemble ; et
Pour chaque chacune desdites combinaisons, une troisième étape constituée de

une première sous-étape (E3a) de détermination d'une première jointure entre la première table de ladite combinaison et une quelconque des autres tables de ladite combinaison ;
une seconde sous-étape (E3b) de détermination d'une jointure entre une table non encore jointe et une quelconque des tables déjà jointes de ladite combinaison ; ladite seconde sous-étape étant itérée pour chaque table non encore jointe dans l'ordre de ladite combinaison jusqu'à la dernière table de ladite combinaison ;

Une quatrième étape (E4) consistant à sélectionner une combinaison parmi lesdites combinaisons, en fonction d'un critère à minimiser, et à réaliser effectivement les jointures déterminées pour la combinaison sélectionnée.

2. Procédé selon la revendication 1, dans lequel ladite première étape (E1) consiste à déterminer ledit sous-ensemble à partir d'une requête transmise par ledit utilisateur.

3. Procédé selon l'une des revendications 1 ou 2, dans lequel ladite seconde étape (E2) consiste à déterminer l'ensemble des combinaisons ordonnées possibles à partir d'une première table fixe.

4. Procédé selon la revendication précédente, dans lequel ladite première table fixe est déterminée par une requête transmise par ledit utilisateur.

5. Procédé selon l'une des revendications précédente, comportant en outre une étape préliminaire (E0) consistant à déterminer un graphe à partir de la base de données et selon lequel les jointures sont déterminées à partir dudit graphe.

6. Procédé selon l'une des revendications précédentes dans lequel ladite première sous-étape et ladite seconde sous-étape (E3b) comportent, pour une combinaison courante, l'établissement d'un chemin entre deux tables pouvant passer par une ou plusieurs tables intermédiaires, ladite une ou plusieurs tables intermédiaires étant incorporée dans ladite combinaison courante et considérée comme jointe.

7. Procédé selon la revendication précédente dans lequel chaque couple de tables est associé à un poids et dans lequel l'établissement d'un chemin est réalisé en fonction desdits poids.

8. Procédé selon la revendication précédente, dans lequel ledit établissement est réalisé conformément à un algorithme de Dijkstra.

9. Procédé selon l'une des revendications précédentes, comportant en outre une étape de tri (ET) consistant à réordonner lesdites tables dans un ordonnancement correspondant à l'ordonnancement dudit sous-ensemble et en y incorporant lesdites tables intermédiaire de sorte que chaque table dudit ordonnancement puisse être jointe à une table précédente dans ledit ordonnancement

10. Procédé selon l'une des revendications 6 à 9 dans lequel ladite quatrième étape (E4) consiste à sélectionner ladite combinaison en fonction du nombre de tables dans chacune desdites combinaisons.

11. Procédé d'interrogation d'une base de données relationnelle comportant les étapes du procédé selon l'une des revendications précédentes, et une étape de transmission d'une requête destinée à ladite base de données et de traitement de ladite requête sur le base desdites jointures.

**EP 2 790 115 A1**

**12.** Programme d'ordinateur comprenant des instructions qui, une fois chargées sur un système de traitement de l'information, sont aptes à mettre en oeuvre le procédé selon l'une des revendications 1 à 11.

**13.** Dispositif pour permettre un accès par un utilisateur à une base de données relationnelle comportant un ensemble de tables consistant à effectuer des jointures entre tables et comportant :

Des premiers moyens pour déterminer un sous-ensemble de tables parmi ledit ensemble de tables ;

Des seconds moyens pour déterminer des combinaisons ordonnées possibles parmi ledit sous-ensemble ; et

Des troisième moyen pour, pour chaque chacune desdites combinaisons,

déterminer une première jointure entre la première table de ladite combinaison et une quelconque des autres tables de ladite combinaison ;

déterminer une jointure entre une table non encore jointe et une quelconque des tables déjà jointes de ladite combinaison ; de façon itérative pour chaque table non encore jointe dans l'ordre de ladite combinaison jusqu'à la dernière table de ladite combinaison ;

Des quatrièmes moyens pour sélectionner une combinaison parmi lesdites combinaisons, en fonction d'un critère à minimiser, et pour réaliser effectivement les jointures déterminées pour la combinaison sélectionnée.

**14.** Dispositif selon la revendication précédente dans lequel lesdits troisièmes moyens sont prévus pour, pour une combinaison courante, établir un chemin entre deux tables pouvant passer par une ou plusieurs tables intermédiaires, ladite une ou plusieurs tables intermédiaires étant incorporée dans ladite combinaison courante et considérée comme jointe.

**15.** Dispositif selon l'une des revendications 13 ou 14, comportant en outre des moyens de tri (ET) prévus pour réordonner lesdites tables dans un ordonnancement correspondant à l'ordonnancement dudit sous-ensemble et en y incorporant lesdites tables intermédiaire de sorte que chaque table dudit ordonnancement puisse être jointe à une table précédente dans ledit ordonnancement.

Fig. 1

Fig. 2

Europäisches Patentamt

European Patent Office

Office européen des brevets

**RAPPORT DE RECHERCHE EUROPEENNE**

Numéro de la demande

EP 14 16 3331

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | "Système de gestion de base de données", wikipedia , 11 mars 2013 (2013-03-11), XP002718783, Extrait de l'Internet: URL:http://fr.wikipedia.org/w/index.php?title=Syst%C3%A8me_de_gestion_de_base_de_donn%C3%A9es&oldid=89754110 [extrait le 2014-01-15] * page 1 *  ----- | 1-15 | INV. G06F17/30 |

**DOMAINES TECHNIQUES RECHERCHES (IPC)**

G06F

Le présent rapport a été établi pour toutes les revendications

| Lieu de la recherche | Date d'achèvement de la recherche | Examinateur |
|---|---|---|
| Munich | 21 mai 2014 | Zubrzycki, Wojciech |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

................................................................
& : membre de la même famille, document correspondant

EPO FORM 1503 03.82 (P04C02)